# EUROPÄISCHE PATENTANMELDUNG

(11) **EP 1 204 035 A2**
(43) Veröffentlichungstag der Anmeldung: **08.05.2002**
(21) Anmeldenummer: 01203563.0
(22) Anmeldetag: 20.09.2001
(51) Int. Cl.: G06F 17/30

(54) **Verfahren zur Erkennung von Schreibkonflikten in replizierten Datenbanken ohne speicheroverhead**

(30) Priorität: 23.09.2000 DE 10047216
(71) Anmelder: Philips Corporate Intellectual Property GmbH, 52064 Aachen (DE); Koninklijke Philips Electronics N.V., 5621 BA Eindhoven (NL)
(72) Erfinder: Baumeister, Markus, Weisshausstrasse 2, 52066 Aachen (DE); Hauptmann, Steffen, Dr., Weisshausstrasse02, 52066 Aachen (DE); Klabunde, Karin, Weisshausstrasse02, 52066 Aachen (DE)
(74) Vertreter: Volmer, Georg, Dipl.-Ing.

(57) **Zusammenfassung**

Die Erfindung bezieht sich auf ein Netzwerk mit Netzwerkknoten (1 bis 3) und einem auf allen Netzwerkknoten verteilten Softwaresystem mit einem Datenbankmanagementsystem (7 bis 9), das während eines Zugriffs eines als Klienten (10 bis 12) bezeichneten Benutzers des Datenbankmanagementsystems (7 bis 9) auf ein Datenobjekt zur Berechnung einer Charakterisierungseinheit des Datenobjekts vorgesehen ist, und die Charakterisierungseinheit zur Übergabe an den Klienten (10 bis 12) und der Klient (10 bis 12) zur Speicherung der Charakterisierungseinheit vorgesehen sind.

## Beschreibung

Die Erfindung bezieht sich auf ein Netzwerk mit Netzwerkknoten und einem auf allen Netzwerkknoten verteilten Softwaresystem mit einem Datenbankmanagementsystem.

Ein solches Netzwerk ist aus Ralf Steinmetz (Hrsg.): "Kommunikation in verteilten Systemen (KiVS)", 11. ITG/GI-Fachtagung, Darmstadt, 2.-5. März 1999; Stephan Abramowski, Heribert Baldus, Tobias Helbig: "Digitale Netze in Wohnungen - Unterhaltungselektronik im Umbruch", Seiten 340 bis 351, bekannt. Es werden in dieser Veröffentlichung Anforderungen für ein zukünftiges Netzwerk im Heimbereich mit der darin verwendeten Software beschrieben. Wie in einem solchen Netzwerk mit einem verteilten Softwaresystem Schreibkonflikte in Datenbanken erkannt werden, wird nicht näher erläutert.

Der Erfindung liegt die Aufgabe zugrunde, ein Netzwerk mit einem Softwaresystem zu schaffen, welches bei gleichzeitigem Schreibzugriff unterschiedlicher Benutzer, der sogenannten Klienten, des verteilten Softwaresystems auf die Datenbank einen Datenverlust vermeidet, und damit das sogenannte "Lost update"-Problem löst.

Die Aufgabe wird durch ein Netzwerk der eingangs genannten Art dadurch gelöst, dass das Softwaresystem ein Datenbankmanagementsystem enthält, welches während eines Zugriffs eines als Klienten bezeichneten Benutzers des Datenbankmanagementsystems auf ein Datenobjekt zur Berechnung einer Charakterisierungseinheit des Datenobjekts vorgesehen ist, und die Charakterisierungseinheit zur Übergabe an den Klienten und der Klient zur Speicherung der Charakterisierungseinheit vorgesehen sind.

In einem Netzwerk mit Netzwerkknoten und einem auf allen Netzwerkknoten verteilten Softwaresystem sorgt ein Datenbankmanagementsystem als Schnittstelle zwischen Programm (z.B. Anwendung) und Daten für die Datenübergabe. In Datenbanken, deren Aufgabe z.B. die Verwaltung von Benutzer- und Administrationsdaten sowie Gerätevoreinstellungen in digitalen Hausnetzen ist, können durch zwei überlappende Lese-/Schreibzugriffe zweier Klienten Probleme entstehen, die häufig in Datenverlust resultieren und als sogenannte "Lost update"-Probleme in der Literatur bezeichnet werden. Datenverluste entstehen dadurch, dass Daten, die durch einen ersten schreibenden Klienten geschrieben wurden, von einem zweiten schreibenden Klienten überschrieben werden, ohne dass dieser die neu von dem ersten Klienten geschriebene Daten gelesen hätte.

Bei jedem Lesezugriff auf ein Datenobjekt erhält ein Klient (z.B. ein Klient hinter dem eine Anwendung steht) das eigentliche Datenobjekt zusammen mit einer durch das Datenbankmanagementsystem berechneten Charakterisierungseinheit, die z.B. in Form einer CRC-Prüfsumme (Cyclic Redundancy Check) oder eines Hashwertes das Datenobjekt kennzeichnet und eine wesentlich geringere Menge Speicherplatz benötigt als dieses. Falls der Klient eine Änderung des Datenobjekts beabsichtigt, speichert er die Charakterisierungseinheit vorrübergehend, um sie beim Schreibzugriff dem Datenbankmanagementsystem zusammen mit dem geänderten Datenobjekt zu übergeben.

Vor Ausführung dieses Schreibzugriffs vergleicht das Datenbankmanagementsystem die ihr von dem Klienten übergebenen Charakterisierungseinheit mit der aktuellen von dem Datenbankmanagementsystem berechneten Charakterisierungseinheit. Stimmen die Charakterisierungseinheiten überein, wird der Schreibzugriff des Klienten ausgeführt. Fällt der Vergleich negativ aus und die Charakterisierungseinheiten stimmen nicht überein, verarbeitet das Datenbankmanagementsystem den Schreibzugriff, indem z.B. eine Ablehnung des Schreibzugriffs stattfindet oder der Versuch einer Vereinigung (Merge) der Daten unternommen wird.

Während einer Bearbeitung verändert der Klient das Datenobjekt und schickt bei einer verteilten Schreiboperation eine Änderungsanweisung zusammen mit der Charakterisierungseinheit in einer Nachricht an das Datenbankmanagementsystem.

In einem Netzwerk mit anhand der Charakterisierungseinheiten gekennzeichneter Datenobjekte besteht keine Notwendigkeit für eine zentrale Koordinationseinheit der Schreibzugriffe auf Daten. Die Konflikterkennung findet während der Aufforderung zum Schreiben statt und die dafür notwendige zusätzliche Information kann mit den Änderungsdaten übertragen werden, deshalb ist keine zusätzliche Kommunikation notwendig. Da sich die Charakterisierungseinheit jederzeit aus den in der Datenbank gespeicherten Daten berechnen lässt, muss auch keine Information zur Erkennung von Schreibkonflikten in der Datenbank gespeichert werden. Folglich ist weder eine Speicherung der Zustandsinformationen durch das Datenmanagementsystem zur Sicherung der Daten im Falle eines Ausfalls der Netzwerkknoten noch die Speicherung von Zeitinformationen über zuletzt gespeicherte Daten zur Erkennung von Konflikten notwendig.

Ein Ausführungsbeispiel der Erfindung wird nachstehend anhand der Figuren näher erläutert. Es zeigen:
- Fig. 1: ein Netzwerk mit verschiedenen Netzwerkknoten,
- Fig. 2: Zeichengabeablaufdiagramm zur zeitlichen Darstellung der Reihenfolge der Aktionen während eines Schreibzugriffs eines Klienten auf ein Datenobjekt.

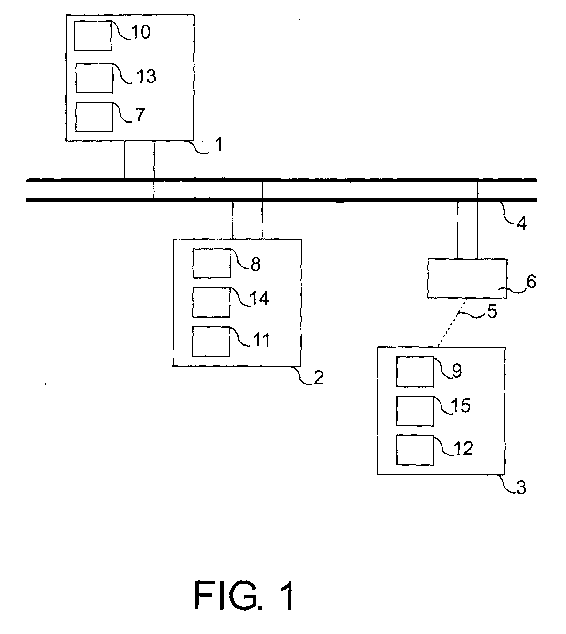

Fig. 1 zeigt ein Netzwerk, welches verschiedene Netzwerkknoten 1 bis 3 über ein Bussystem 4 miteinander koppelt. Das Bussystem 4 kann auch jede andere Art von Netzwerktopologie oder Kommunikationssystem sein. Die Netzwerkknoten 1 bis 3 können auch über eine drahtlose Verbindung 5 und eine Sende-/Empfangsstation 6 mit dem Bussystem 4 gekoppelt werden. Hierbei können z.B. Infrarot-, Ultraschall- oder Funkverbindungen verwendet werden. Solche Netzwerkknoten können PCs und Geräte der Unterhaltungselektronik, wie z.B. Fernsehgerät, Set-Top-Box, Tuner, Kamera, digitaler Videorecorder, CD-Spieler sein.

Auf jedem der drei Netzwerkknoten 1 bis 3 befinden sich ein verteiltes Datenbankmanagementsystem 7 bis 9 und mindestens ein Klient 10 bis 12. Zusätzlich kann sich eine verteilte Datenbank 13 bis 15 auf den Netzwerkknoten 1 bis 3 befinden.

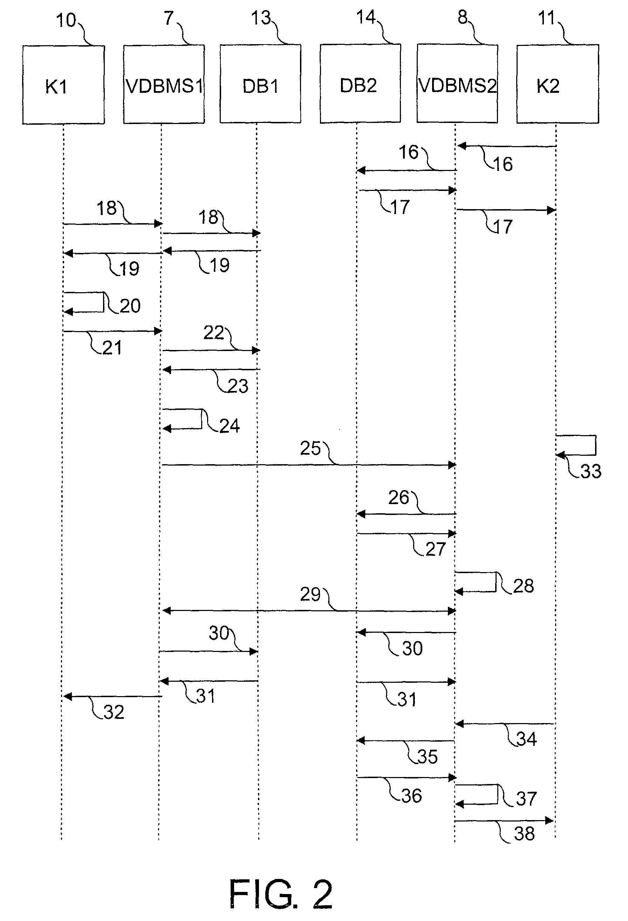

Fig. 2 verdeutlicht die Aktionen während eines Schreibzugriffs eines Klienten auf ein Datenobjekt. In diesem Beispiel greifen der Klient (K1) 10 des Netzwerkknoten 1 und Klient (K2) 11 des Netzwerkknoten 2 beide auf ein unter einem Schlüssel S1 gespeichertes Datum (Datenelement) zu. Anhand des Schlüssels kann ein Datenobjekt innerhalb der Datenbank identifiziert werden. Sowohl Klient 10 als auch Klient 11 möchten das Datenobjekt lesen, es ggf. lokal auf dem jeweiligen Netzwerkknoten verändern, und danach das gelesene Datenobjekt mit dem geänderten Datenobjekt zu überschreiben, damit die Änderung systemweit festgehalten wird.

Der Klient 11 fordert mit einer Anfrage 16, die den Schlüssel S1 beinhaltet, bei dem verteilten Datenbankmanagementsystem (VDBMS2) 8 das unter dem Schlüssel S1 gespeicherte Datenobjekt an. Das Datenbankmanagementsystem 8 leitet die Anfrage 16 beispielsweise weiter an ihre lokale Datenbank (DB2) 14, die mit einer Antwort 17 das Datenobjekt dem Datenbankmanagementsystem 8 wiedergibt. Das Datenbankmanagementsystem 8 gibt die Antwort 17 mit dem Datenobjekt und einer aus dem Datenobjekt berechneten Charakterisierungseinheit an den Klienten 11 weiter. Die Charakterisierungseinheit besteht in diesem Beispiel aus einer Prüfsumme CRC1.

Analog liest der Klient 10 mit einer Anfrage 18 über das Datenbankmanagementsystem (VDBMS1) 7 bei der lokalen Datenbank (DB1) 13 das Datenobjekt aus. Ihm wird zusammen mit dem von der lokalen Datenbank 13 wiedergegebenen Datenobjekt in einer Antwort 19 durch das Datenbankmanagementsystem 7 auch eine Prüfsumme CRC1 geliefert. Da die Daten in beiden lokalen Datenbanken 13 und 14 gleich waren, erhalten beide Klienten 10 und 11 die gleiche Charakterisierungseinheit CRC1.

Während einer Bearbeitung 20 verändert der Klient 10 das Datenobjekt und schickt danach das veränderte Datenobjekt mit dem Schlüssel S1 und der ursprünglichen Prüfsumme CRC1 in einer Aufforderung 21 an das Datenbankmanagementsystem 7, damit das veränderte Datenobjekt unter dem Schlüssel S1 gespeichert werden kann. Daraufhin fordert das Datenbankmanagementsystem 7 durch eine Anfrage 22 das unter dem Schlüssel S1 gespeicherte Datenobjekt bei seiner lokalen Datenbank 13 an. In einer Antwort 23 erhält das Datenbankmanagementsystem 7 das gewünschte Datenobjekt von der lokalen Datenbank 13 und berechnet in einer Selbstabfrage 24 dessen Prüfsumme CRC1.

Stimmt die zuletzt berechnete Prüfsumme CRC1, mit der ihm von dem Klienten 10 in der Aufforderung 21 übergebenen Prüfsumme CRC1 überein, dann wurde das Datum in der Zwischenzeit nicht geändert und das Datenobjekt kann systemweit überschrieben werden, ohne dass sich ein sog. "Lost update"-Problem ergeben würde. Liegt das Datum repliziert vor, so muss die Überprüfung der Charakterisierungseinheit im Rahmen eines Zweiphasen-Commit-Protokolls erfolgen. Das Zweiphasen-Commit-Protokoll wird bei sogenannten Transaktionen (eine zusammengehörige Folge von Operationen, die auf eine Datenbank zugreifen), die mit verteilten Datenbeständen arbeiten, eingesetzt. Dabei wird die Änderungsweisung sowie die Charakterisierungseinheit an alle Replizierungsorte übermittelt und dort analog dem nicht replizierten Fall behandelt. Im Beispiel sendet darum das Datenbankmanagementsystem 7 eine Änderungsaufforderung 25 an das Datenbankmanagementsystem 8. Dieses liest das betroffene Datum aus der lokalen Datenbank 14 mittels einer Aufforderung 26 und einer Rückgabe 27 der Datenbank 14. Danach berechtet das Datenbankmanagementsystem 8 in einer Selbstabfrage 28 die Charakterisierungseinheit. Stimmt diese Charakterisierungseinheit mit der übermittelten überein, so bereitet das Datenbankmanagementsystem 8 den Schreibvorgang vor und stimmt dem Transaktionsabschluss zu (Commit), andernfalls lehnt es den Transaktionsabschluss ab (Abort). Stimmen alle Replikationsorte zu, so werden die Schreiboperationen 30 tatsächlich ausgeführt und durch die entsprechenden Datenbanken 13 und 14 mittels einer Bestätigung 31 bestätigt. Der Klient 10 erhält mit einer Rückgabe 32 den neuen Wert CRC2 der Prüfsumme des geschriebenen Datenobjekts.

In der Zwischenzeit hat der Klient 11 das ursprüngliche von ihm gelesene Datenobjekt lokal während einer Bearbeitung 33 verändert und schickt eine Aufforderung 34 mit der ursprünglich ihm übergebenen Prüfsumme CRC1 an das Datenbankmanagementsystem 8, das Datenobjekt mit dem neuen Inhalt zu überschreiben. Das Datenbankmanagementsystem 8 verlangt durch einen Aufruf 35 das unter dem Schlüssel S1 gespeicherte Datenobjekt von der lokalen Datenbank 14. Die lokale Datenbank 14 gibt dem Datenbankmanagementsystem 8 das durch den Klienten 10 überschriebene Datenobjekt in einer Antwort 36 wieder. In einer Selbstabfrage 37 berechnet das Datenbankmanagementsystem 8 die Prüfsumme CRC2 dieses Datenobjekts. Sie vergleicht die berechnete Prüfsumme CRC2 mit der ihr vom Klient 11 in der Aufforderung 34 übergebenen Prüfsumme CRC1 und stellt fest, dass die Prüfsummen nicht übereinstimmen. Aus diesem Grund wird der Klient 11 mit einer Fehlermeldung 38 informiert, dass seine Schreiboperation fehlgeschlagen ist. Das Datenbankmanagementsystem 8 hat erkannt, dass der Klient 11 das Datenobjekt nicht mit dem von Klient 10 geänderten Inhalt gelesen hat, sondern nur das ursprünglich gespeicherte Datenobjekt kennt.

Der Klient 11 bzw. die hinter dem Klienten 11 stehende Anwendung kann nun entscheiden, entweder auf das Schreiben zu verzichten, oder das Objekt erneut zu lesen, zu ändern und wieder zu schreiben. Da nach dem zweiten Lesen die Prüfsummen übereinstimmen würden, könnte der Schreibzugriff erfolgreich durchgeführt werden.

Alternativ kann das verteilte Datenbankmanagementsystem 8 Methoden zum Vereinigen (Mergen) verschiedener Änderungen beherrschen und sie, nach Entdeckung des "Lost update"-Problems ausführen und somit trotzdem das Schreiben ermöglichen.

## Patentansprüche

1. Netzwerk mit Netzwerkknoten (1 bis 3) und einem auf allen Netzwerkknoten verteilten Softwaresystem
mit einem Datenbankmanagementsystem (7 bis 9), das während eines Zugriffs eines als Klienten (10 bis 12) bezeichneten Benutzers des Datenbankmanagementsystems (7 bis 9) auf ein Datenobjekt zur Berechnung einer Charakterisierungseinheit des Datenobjekts vorgesehen ist, und die Charakterisierungseinheit zur Übergabe an den Klienten (10 bis 12) und der Klient (10 bis 12) zur Speicherung der Charakterisierungseinheit vorgesehen sind.

2. Netzwerk nach Anspruch 1
**dadurch gekennzeichnet,**
**dass** das Datenbankmanagementsystem (7 bis 9) zum Vergleich der bei dem Klienten (10 bis 12) gespeicherten Charakterisierungseinheit mit der aktuellen Charakterisierungseinheit vorgesehen ist,
**dass** das Datenbankmanagementsystem (7 bis 9) bei Übereinstimmung der Charakterisierungseinheiten zur Ausführung des Schreibzugriffs vorgesehen ist und
**dass** das Datenbankmanagementsystem (7 bis 9) zur Verarbeitung des Schreibzugriffes vorgesehen ist, falls die Charakterisierungseinheiten nicht übereinstimmen.

3. Netzwerk nach Anspruch 2
**dadurch gekennzeichnet,**
**dass** das entfernte Datenbankmanagementsystem (7 bis 9) bei einer verteilten Schreiboperation Änderungsanweisung und Charakterisierungseinheit in jeweils einer gemeinsamen Nachricht erhält.
